(19) Europäisches Patentamt
European Patent Office
Office européen des brevets

(11) **EP 2 662 755 A1**

(12) **EUROPEAN PATENT APPLICATION**

(43) Date of publication:
**13.11.2013 Bulletin 2013/46**

(51) Int Cl.:
**G06F 3/033** (2013.01)

(21) Application number: **12167463.4**

(22) Date of filing: **10.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BlackBerry Limited Waterloo, ON N2L 3W8 (CA)**

(72) Inventor: **Wang, Qian Waterloo Ontario N2L 3W8 (CA)**

(74) Representative: **Greenaway, Martin William et al Kilburn & Strode LLP Electronics 20 Red Lion Street London, Greater London WC1R 4PJ (GB)**

Remarks:
Amended claims in accordance with Rule 137(2) EPC.

(54) **Method and apparatus for providing stylus orientation and position input**

(57) Position and orientation of a stylus 100 with respect to a sensing surface 108 of a host electronic device 110 are provided by sensing first and second electromagnetic fields at a sensing surface, the first and second electromagnetic fields varying in strength in response to stylus orientation, and determining the orientation from a difference in sensed field strength between the first and second electromagnetic fields. The first and second electromagnetic fields may be produced by proximal (112) and distal (114) electromagnetic transmitters of the stylus 100. The orientation may be used, for example, to control the response of a computer drawing application executed on the host electronic device 110.

FIG. 3

**Description**

<u>BACKGROUND</u>

Stylus pointing devices enable information to be input to a host electronic device. When the tip of the stylus is placed in close proximity to a display surface of the host device, the position of the tip may be determined by the host by a variety of methods, including the influence of the stylus on the electrical properties of the tablet (i.e., via electromagnetic induction, changes in electrical resistance, electrical capacitance, and the like); the optical properties of the tablet; or by ultrasonic positioning.

One method for determining stylus position is to employ a surface of the host to sense an electromagnetic field generated by a transmitter in the stylus. The sensed field information is processed to yield a position. However, since this determination yields the position of the transmitter as opposed to the tip of the stylus, the transmitter must be disposed proximal to the tip of the stylus.

A common use of a stylus in this regard is to provide position input to a computer drawing or handwriting application. For such an application, the stylus may be used, for example, to draw lines, move or size objects, and to interact with a user interface. When using typical physical drawing implements such as a pen, pencil or marker, line properties may be varied by changing the tilt angle of drawing implement. It would therefore be desirable to provide such a capability when drawing or writing with a stylus in an electronic environment, such that the response to the stylus inputs can be made to vary in dependence upon the tilt angle of the stylus with respect to the host computer device. In this regard, it would thus be desirable to provide an expedient for sensing the orientation of a stylus with respect to a sensing or drawing surface of the host device.

<u>BRIEF DESCRIPTION OF THE DRAWINGS</u>

Exemplary embodiments of the present disclosure will be described below with reference to the included drawings such that like reference numerals refer to like elements and in which:

**FIG. 1** is a diagram of a drawing system in accordance with exemplary embodiments of the present disclosure;

**FIG. 2** is a diagram of a host electronic device, in accordance with illustrative embodiments of the disclosure;

**FIG. 3** is a diagram showing an exemplary geometric arrangement of a stylus disposed at an angle with respect to a sensing surface in accordance with illustrative embodiments of the present disclosure;

**FIG.4** is a diagram depicting a further view of the orientation of stylus transmitters with respect to a sensing surface of a host electronic device in accordance with exemplary embodiments of the present disclosure;

**FIG.5** is a diagram showing yet another view of an illustrative geometric arrangement of stylus transmitters with respect to a sensing surface of a host electronic device in accordance with exemplary embodiments of the present disclosure;

**FIG. 6** is a flow chart of a method for providing stylus position and orientation input in accordance with exemplary embodiments of the present disclosure and; and

**FTG. 7** is a flow chart of another method for providing stylus position and orientation input in accordance with exemplary embodiments of the present disclosure.

<u>DETAILED DESCRIPTION</u>

For simplicity and clarity of illustration, reference numerals may be repeated among the figures to indicate corresponding or analogous elements. Numerous details are set forth to provide an understanding of the illustrative embodiments described herein. The exemplary embodiments may be practiced without these details. In other instances, well-known methods, procedures, and components have not been described in detail to avoid obscuring the embodiments described. The description is not to be considered as limited to the scope of the embodiments disclosed herein.

The present disclosure relates to a method, device and apparatus for providing stylus orientation input. In operation, a computer input stylus interacts with a sensing surface of a host electronic device to provide stylus orientation input. The stylus orientation input may be utilized by a computer drawing application executed on an application processor on the host electronic device. For example, the tilt of a stylus may be used to control the width of a line produced by a virtual drawing tool, such as pen or brush.

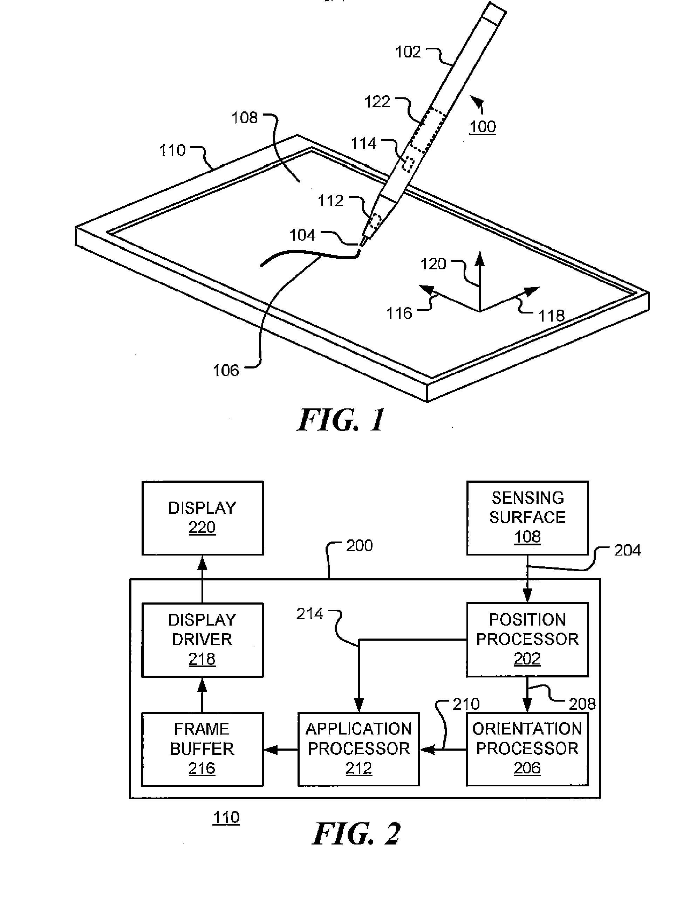

**FIG. 1** is a diagram of an example drawing system in accordance with some embodiments of the disclosure. In **FIG. 1,** a stylus 100 has a body 102 and a tip 104. The tip 104 is located at one end of the body 102 and is used, for example, to draw a line or other image 106 on a display screen. The display screen may be combined with a sensing surface 108 and form part of a host electronic device 110. The host electronic device 110 may be, for example, a laptop computer, tablet computer (tablet), mobile phone, personal digital assistant (PDA), display screen, or other portable or non-portable electronic device. The stylus 100 includes a first transmitter 112 located in the stylus body 102 and operable to generate a first electromagnetic field, and a second transmitter 114, also located in the stylus body 102 and operable to generate a second electromagnetic field. The first transmitter 112 is proximal to the tip 104 of the stylus and the second transmitter 114 is distal to the tip 104 of the stylus. The first and second (proximal and distal) transmitters are driven by a control circuit 122. The control circuit 122 may drive the first and second transmitters together or separately. In one embodiment, the control circuit 122 alternates between driving the first transmitter and driving the second transmitter, so that the first and second electromagnetic fields do not interfere with one another. In a further embodiment, the transmitters are driven simultaneously but at different frequencies or with different waveforms. The electromagnetic fields produced by the transmitters may be unidirectional or directional. Directional fields may be obtained, for example, through antenna design or by the use of shielding.

In operation, the electromagnetic fields are sensed by the sensing surface 108 of the host electronic device 110. In one embodiment, the position of a transmitter is determined by sensing a maximum of the electromagnetic field on the sensing surface 108. If the transmitter is positioned close to the tip 104 of the stylus 100, the position of the transmitter may used to approximate the position of the tip 104 on the sensing surface 108.

In the embodiment shown in **FIG.1,** the first and second transmitters are at different locations along the longitudinal axis of the stylus body 102. Thus, the maximum of first electromagnetic field on the sensing surface 108 is displaced from the maximum of the second electromagnetic field on the sensing surface 108. The distance between these maxima is dependent on the orientation of the stylus with respect to the sensing surface and may be used to determine the tilt of the stylus with respect to the sensing surface. This will be discussed in more detail below.

In the sequel, the sensing surface 108 is defined to lie in a plane defined by an 'up' direction 116 and a 'right' direction 118. The direction 120 is perpendicular to the sensing surface 108.

**FIG. 2** is a diagram of a host electronic device 110, in accordance with various example embodiments of the disclosure. A processing circuit 200 of the host electronic device includes a position processor 202 that is responsive to a signal 204 from the sensing surface 108. The position processor 202 detects a first position on the sensing surface dependent upon a first electromagnetic field generated by the first transmitter of a stylus and a second position on the sensing surface dependent upon the second electromagnetic field generated by the second transmitter of the stylus. An orientation processor 206 is operable to determine, dependent upon the first and second positions 208, an orientation of the stylus with respect to the sensing surface. The orientation processor 206 outputs an orientation signal 210 dependent upon the orientation of the stylus. An application processor 212 is responsive to the orientation signal 210 and uses the signal to control a computer application. In one embodiment, the position processor 202 also outputs a tip position signal 214 that corresponds to an estimated position of the tip of the stylus. The tip position signal 214 is dependent upon the first and second positions.

The computer application may be, for example, a computer drawing application. In this example, the application processor 212 generates images that are passed to a frame buffer 216. The frame buffer 216 is accessed by a display driver 218 that renders images generated by the application processor on a display screen 220. The display screen 220 and the sensing surface 108 may be located in close proximity, such that, for example, a line displayed on the display screen follows the trajectory of the stylus to simulate physical drawing.

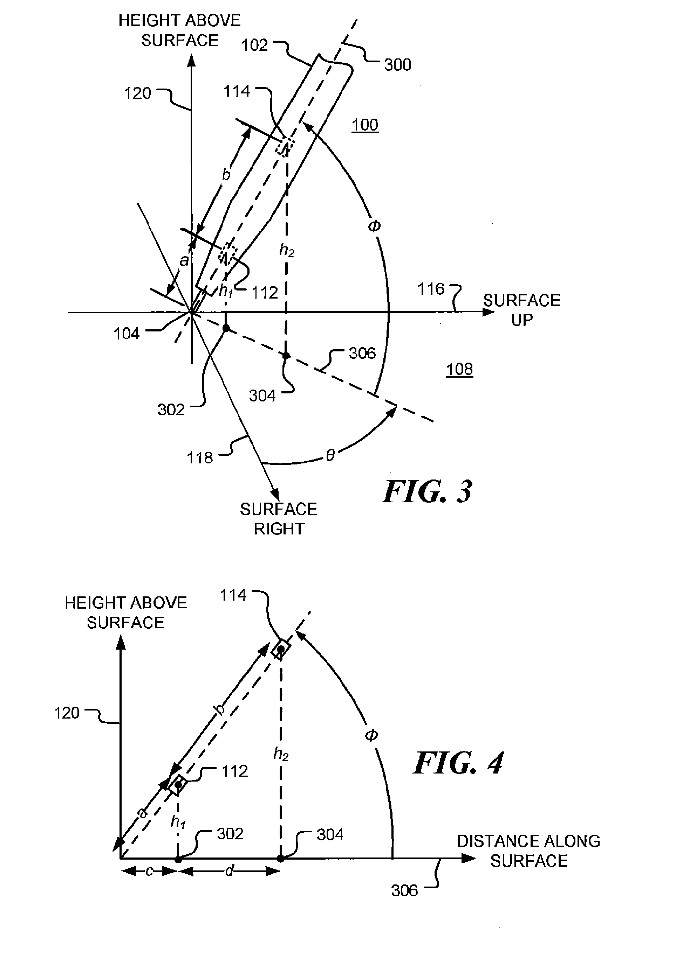

**FIG. 3** is a diagram showing an example geometric arrangement of a stylus 100 interacting with a sensing surface 108. The stylus is tilted such the longitudinal axis 300 of the stylus is at an elevation angle $\phi$ to the sensing surface 108. The first (proximal) transmitter 112 is at a height $h_1$ above the sensing surface and the second (distal) transmitter 114 is at a height $h_2$ above the sensing surface. A first position 302 corresponds to the position on the sensing surface at which the electromagnetic field from the first transmitter 112 is at a maximum. This may be, for example, the position on the surface closest to the first transmitter. However, it may be a different position if the electromagnetic field is directional. A second position 304 corresponds to the position on the sensing surface at which the electromagnetic field from the second transmitter 114 is at a maximum. This may be, for example, the position on the surface closest to the second transmitter. The line 306 on the surface through the first and second positions is at an azimuth angle $\theta$ to the direction 118. The elevation angle $\phi$ and the azimuth angle $\theta$ define the orientation of the stylus with respect to the sensing surface 108. The tilt angle is defined as the angle between direction 120 and the stylus and, in radians, is given by $\frac{\pi}{2} - \phi$.

Referring again to **FIG. 3,** the distance of the first transmitter 112 from the tip 104 of the stylus is denoted by the distance $a$ and the distance of the second transmitter 114 from the first transmitter 112 is denoted by the distance b. In operation, the position processor of the host electronic device detects the first and second positions, 302 and 304. The position processor may also determine a third position, corresponding to the position of the tip 104 of the stylus 100.

In a further embodiment, the position processor is operable to sense the strength of the first and second electromagnetic fields at the positions 302 and 304. These field strengths are related to the heights $h_1$ and $h_2$ of the first and second transmitters above the sensing surface and so can be used to estimate the heights $h_1$ and $h_2$. In particular, the height $h_2$ of the distal transmitter above the sensing surface is related to the elevation angle $\phi$ by

$$h_2 = (a+b)\sin(\phi), \qquad\qquad (1)$$

and the elevation angle $\phi$ is given by

$$\phi = \sin^{-1}\left(\frac{h_2}{a+b}\right). \qquad\qquad (2)$$

More generally, since $a$ and b are constant and the relationship between the field strength and the height is fixed, the tilt angle of the stylus $\left(\frac{\pi}{2}-\phi\right)$, which is directly related to the elevation angle $\phi$, may be expressed as a function of the sensed electromagnetic field strength produced by the distal transmitter, with greater field strength indicating greater tilt. This function may be stored as a lookup table or computed from an analytic expression, for example.
The elevation, or equivalently the tilt, of the stylus may also be determined from the first and second positions as shown in **FIG. 4.** Referring to **FIG. 4,** the first position 302, relating to the first transmitter 112 and the second position 304, relating to the second transmitter 114, are separated by a distance d on the sensing surface. The first position 302 is separated by a distance c from the tip of the stylus. The distance d is given by

$$d = b\cos(\phi), \qquad\qquad (3)$$

where $b$ is the distance between the first and second transmitters. The elevation angle $\phi$ is given by

$$\phi = \cos^{-1}\left(\frac{d}{b}\right). \qquad\qquad (4)$$

Thus, the elevation angle $\phi$, or equivalently the tilt angle $\left(\frac{\pi}{2}-\phi\right)$, may be determined from the distance d between the first and second positions on the sensing surface.

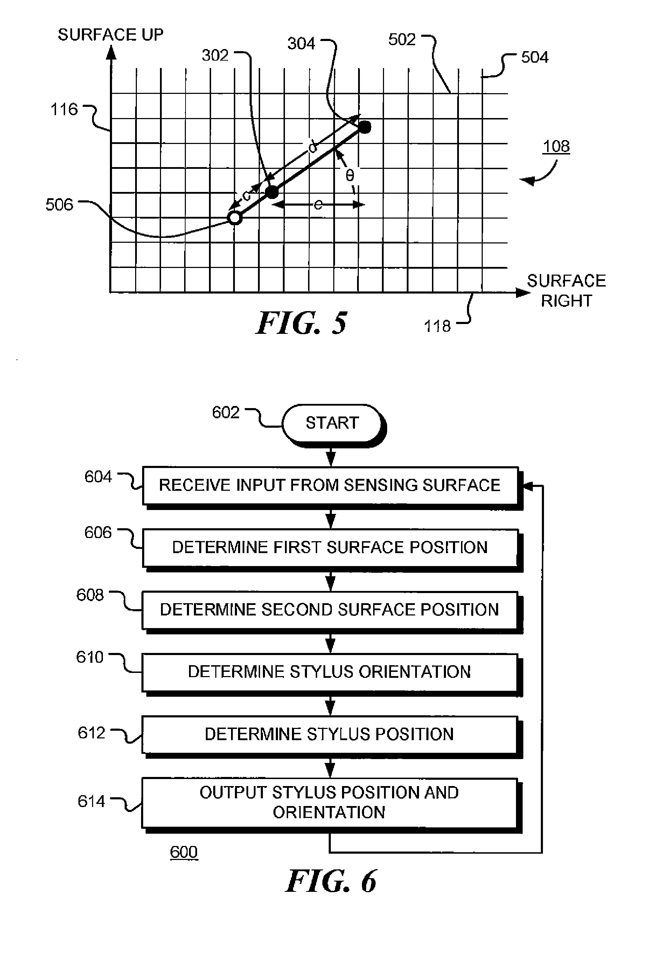

**FIG.5** is a diagram of a sensing surface 108 in accordance with some embodiments of the present disclosure. In this embodiment, the sensing surface 108 comprises a plurality of horizontal sensing elements 502 and a plurality of vertical sensing elements 504 arranged to form a grid. In operation the horizontal and vertical sensing elements having the strongest response to an electromagnetic field of a stylus are identified. This, in turn, identifies a position on the grid. In one embodiment, the first and second transmitters of the stylus are driven alternately, so that a first position 302 and the second position 304 may be identified. The stronger response may be indentified as corresponding to the first (proximal) transmitter. Alternatively, the first and second transmitters may be excited simultaneously using different signals, such as different frequencies, to enable the first and second positions to be distinguished from one another.
The coordinates of the first position 302 are denoted as $(x_1, y_1)$ and the coordinates of the second position 304 are denoted as $(x_2, y_2)$, where x denotes the horizontal (right) coordinate and $y$ denotes the vertical (up) coordinate. The separation e of the first and second positions in the horizontal direction 118 is

$$e = x_2 - x_1 = d\cos(\theta). \qquad\qquad (5)$$

Thus, the azimuth angle $\theta$ is given by

$$\theta = \cos^{-1}\left(\frac{x_2 - x_1}{d}\right) = \cos^{-1}\left(\frac{x_2 - x_1}{\sqrt{(x_2 - x_1)^2 + (y_2 - y_1)^2}}\right). \quad (6)$$

The azimuth angle $\theta$ is thus dependent upon the first position, with coordinates $(x_1, y_1)$, and the second position, with coordinates $(x_2, y_2)$.

In operation, the orientation processor of a host electronic device receives one or more inputs from the sensing surface and determines, from the inputs, a first surface position 302 dependent upon the position of a first electromagnetic transmitter of the stylus with respect to the sensing surface and a second surface position 304 dependent upon the position of the second electromagnetic transmitter of the stylus with respect to the sensing surface. The orientation of the stylus with respect to the sensing surface is then determined upon the first and second surface positions. An orientation signal, dependent upon the orientation of the stylus, may be output to control a computer application. For example, the width of a line drawn on a display screen of the host electronic device may be varied dependent upon the orientation signal.

In one embodiment, a third surface position 506 may be determined, dependent upon the first and second surface positions, the third surface position corresponding to a stylus tip position on the sensing surface. A tip position signal may be output dependent upon the third surface position to control a computer application. The third position may be defined by the coordinates

$$(x_3, y_3) = \left(x_1 + \frac{a}{b}(x_1 - x_2), y_1 + \frac{a}{b}(y_1 - y_2)\right), \quad (6)$$

which are dependent upon the coordinates of the first and second surface positions and upon the relative positions of the first and second transmitters in the stylus body.

FIG. 6 is a flow chart of an example method 600 for providing stylus position and orientation input, in accordance with some embodiments of the disclosure. Following start block 602 in **FIG. 6,** one or more inputs are received, at block 604, from a sensing surface in response to a stylus. The inputs are generated in response to electromagnetic fields generated by two or more electromagnetic transmitters on the stylus. From the one or more inputs, a first surface position is determined at block 606, dependent on the electromagnetic field from a first stylus transmitter, proximal to the tip of the stylus. At block 608 a second surface position is determined from the one or more inputs, dependent on the electromagnetic field from a second stylus transmitter, distal to the tip of the stylus. At block 610, the orientation of the stylus is determined dependent upon the first and second surface positions. The orientation may depend upon one or both of the elevation angle (or equivalently the tilt angle) and the azimuth angle of the stylus with respect to the sensing surface. At block 612 the position of the tip of the stylus is determined. The position may be dependent upon the first surface position or upon a combination of the first surface position and the second surface position. At block 614, the stylus position and stylus orientation are output. The output may be used, for example, to control the response of a computer drawing application to the stylus. In one embodiment, the trajectory of the stylus position may define a line displayed on a display screen and the orientation of the stylus may be used to control the width of the line. Other settings of the computer drawing application may be controlled without departing from the present disclosure. After block 614, flow returns to block 604, so that the position and orientation of the stylus are repeatedly determined.

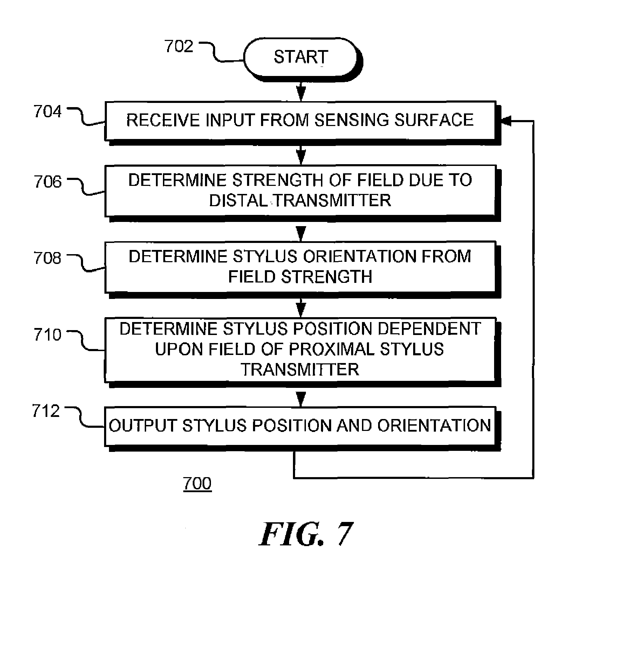

FIG. 7 is a flow chart of a further example method 700 for providing stylus position and orientation input in accordance with some embodiments of the disclosure. Following start block 702 in **FIG. 7,** one or more inputs are received, at block 704, from a sensing surface in response to a stylus. The inputs are generated in response to electromagnetic fields generated by two or more electromagnetic transmitters on the stylus. From the one or more inputs, the strength of an electromagnetic field produced by a distal (with respect to the tip of the stylus) transmitter of the stylus is determined at block 706. The field strength is dependent upon the distance of the distal transmitter from the sensing surface, which, in turn, is dependent upon the elevation or tilt angle of the stylus with respect to the sensing surface. The field strength is used to determine the orientation of the stylus at block 708. At block 710, the position of the stylus on the sensing surface is determined dependent upon the electromagnetic field produced by a proximal (with respect to the tip of the stylus) transmitter. Alternatively, the position of the stylus may be determined dependent upon the electromagnetic fields from both the distal and proximal transmitters of the stylus. At block 712, the position and orientation of the stylus are output. The output may be used, for example, to control the response of a computer drawing application to the stylus.

From the above description, it will be apparent that use of a second transmitter in a stylus enables the orientation of the stylus, both in elevation (or tilt) and azimuth to be determined. The use of a second transmitter also enables the position of the tip of the stylus to be determined more accurately.

The elevation or tilt may be used to control attributes of a drawing tool. For example, the width of line drawn in response to stylus movement may be varied dependent upon the tilt of the stylus. This allows for continuous control of the line width without user interaction with a user interface of the host electronic device. The tilt or elevation may be used to control other functions of the host electronic device. Similarly the, azimuth angle may be used to control functions of the electronic devices. For example, azimuth rotation of the stylus in the may be used to control rotation of an object rendered on a display screen.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

It will be appreciated that any module or component disclosed herein that executes instructions may include or otherwise have access to non-transient and tangible computer readable media such as storage media, computer storage media, or data storage devices (removable or non-removable) such as, for example, magnetic disks, optical disks, or tape data storage. For example, any or all of the position processor, orientation processor and application processor of the host electronic device may be implemented on a programmed processor. Computer storage media may include volatile and nonvolatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The present disclosure may be embodied in other specific forms without departing from its spirit or essential characteristics. The described example embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

**Claims**

1. A stylus 100 comprising:

   a body 102 including:

   a first transmitter 112 operable to generate a first electromagnetic field; and
   a second transmitter 114 operable to generate a second electromagnetic field, the first and second transmitters being displaced from each other.

2. A stylus 100 in accordance with claim 1, wherein the first transmitter 112 is located between the second transmitter 114 and a tip 104 of the stylus 100.

3. A stylus 100 in accordance with claim 1, further comprising a control circuit 122 operable to drive the first (112) and second (114) transmitters alternately.

4. A stylus 100 in accordance with claim 1, further comprising a control circuit 122 operable to drive the first (112) and second (114) transmitters at different frequencies.

5. An electronic device 110 comprising:

   a sensing surface 108 configured to sense external electromagnetic fields; and

a processor 200 coupled to the sensing surface 108 and configured to receive signals representative of a plurality of electromagnetic fields incident on the sensing surface 108, the processor 206 further configured to determine an orientation of a stylus 100 when positioned relative to the sensing surface 108 from a difference in sensed field strength between first and second electromagnetic fields propagating from the stylus 100.

6. The electronic device 110 of claim 5, where the plurality of electromagnetic fields comprises a first electromagnetic field generated by a first transmitter 112 of a stylus 100 and a second electromagnetic field generated by a second transmitter 114 of the stylus 100, and where the processor 200 comprises:

a position processor 202 operable to detect first (302) and second (304) positions corresponding, respectively, to maxima of the first and second electromagnetic fields on the sensing surface 108; and

an orientation processor 206 operable to determine the orientation of the stylus 100 with respect to the sensing surface 108 dependent upon the first (302) and second (304) positions.

7. The electronic device 110 of claim 5, further comprising:

an application processor 212, responsive to the orientation of the stylus 100 and operable to control a computer application dependent upon the orientation, and

a display screen 220 operable to render an image 106 generated by the application processor 212 dependent upon the orientation of the stylus 100.

8. The electronic device 110 of claim 7, wherein the application processor 212 is operable to adjust the width of a line 106 drawn rendered on the display screen 108 dependent upon the orientation of the stylus 100.

9. The electronic device of claim 5, wherein the processor 200 is further operable to output a tip position signal 214 dependent upon the first and second electromagnetic fields sensed by the sensing surface 108, the tip position signal 214 corresponding to a position of a tip 104 of the stylus 100.

10. A method for determining an orientation of a stylus 100 with respect to a sensing surface 108 of a host electronic device 110, the method comprising:

at the sensing surface 108, sensing a first electromagnetic field emitted from a distal electromagnetic transmitter 114 of the stylus, the distal electromagnetic transmitter 114 being displaced from a tip 104 of the stylus 100;

determining the orientation of the stylus 100 dependent upon the first sensed electromagnetic field; and

generating an orientation signal 210 dependent upon the orientation of the stylus.

11. A method in accordance with claim 10, further comprising:

controlling a computer application dependent upon the orientation signal 210.

12. A method in accordance with claim 10, further comprising:

at the sensing surface 108, sensing a second electromagnetic field emitted from a proximal electromagnetic transmitter 112 of the stylus 100, the proximal electromagnetic transmitter 112 being located in proximity to the tip 104 of the stylus 100;

determining a location of the stylus 100 on the sensing surface 108 dependent upon the second electromagnetic field emitted from the proximal electromagnetic transmitter 112; and

generating a position signal 214 dependent upon the determined location of the stylus 100.

13. A method in accordance with claim 12, further comprising:

determining the orientation from a difference in sensed field strength between the first and second sensed electromagnetic fields relative to a sensing surface 108.

14. A method in accordance with claim 12, where The determined location of the tip 104 of the stylus 100 on the sensing surface 108 is further dependent upon the first electromagnetic field, emitted from the distal electromagnetic transmitter 114, at the sensing surface 108 and upon a stylus configuration.

**15.** A method in accordance with claim 12, further comprising:

controlling a computer application dependent upon the position signal 214.

**Amended claims in accordance with Rule 137(2) EPC.**

**1.** A stylus 100 comprising:

a body 100 including a plurality of directional antennas (112, 114 and 116) displaced from each other and a tip 104 of the body 100 , each antenna configured to radiate an electromagnetic field directed towards the tip 104; and wherein the plurality of directional antennas (112, 114 and 116) are respectively orientated to produce a maximum in the electromagnetic field in the region of the tip 104.

**2.** A stylus 100 in accordance with claim 1, wherein the plurality of directional antennas (112, 114 and 116) comprises three directional antennas spaced at substantially 120° intervals around a longitudinal axis 302 of the stylus 100.

**3.** A stylus 100 in accordance with claim 1, wherein the plurality of directional antennas (112, 114, 116) are equidistant from the tip 104 of the stylus 100.

**4.** A stylus 100 in accordance with claim 3, further comprising:

a communication circuit 304 operable to drive the plurality of directional antennas (112, 114, 116) in phase with one another.

**5.** A system comprising:

a stylus 100 comprising:

a body 102 including a plurality of directional antennas (112, 114, 116) displaced from each other and a tip 104 of the body 102, each antenna configured to radiate an electromagnetic field directed towards the tip 104; and

a host electronic device 110 comprising:

a sensing surface 108 responsive to the electromagnetic fields radiated by the plurality of directional antennas (112, 114 and 116) of the stylus 100, the sensing surface 108 coupled to a sensing circuit 204, the sensing circuit 204 configured to determine a position of the stylus 100 based on a maximum combined electromagnetic field on the sensing surface 108.

**6.** A system in accordance with claim 5, further comprising a display screen 216 operable to render an image 106 dependent upon the position of the stylus 100.

**7.** A system in accordance with claim 5, wherein the plurality of directional antennas (112, 114 and 116) of the stylus comprises three directional antennas spaced at substantially 120° intervals around a longitudinal axis 302 of the stylus 100.

**8.** A method for generating an electromagnetic field from a stylus 100 having a plurality of antennas (112, 114 and 116) and a tip 104, the method comprising:

for each antenna of the plurality of antennas:

generating an excitation signal dependent upon the position of the antenna with respect to the tip 104 of the stylus 100; and
supplying the excitation signal to the antenna (112, 114 or 116);
wherein the plurality of antennas (112, 114 or 116) are respectively orientated to produce a maximum in the electromagnetic field in the region of the tip 104.

**9.** A method in accordance with claim 8, wherein the plurality of antenna (112, 114 and 116) are equidistant from the tip 104 of the stylus 100, and wherein, for each antenna, generating an excitation signal dependent upon the position of the antenna with respect to the tip 104 of the stylus 100 comprises generating a common excitation signal and supplying the common excitation signal to each antenna of the plurality of antennas (112, 114 and 116).

**10.** A method in accordance with claim 8, wherein the plurality of antennas (112, 114 and 116) are uniformly located around a longitudinal axis 302 of the stylus 100.

**11.** A method in accordance with claim 8, wherein the plurality of antennas (112, 114 and 116) comprises three antennas spaced at substantially 120° intervals around a longitudinal axis 302 of the stylus 100.

**12.** A method in accordance with claim 8, the method further comprising:

sensing the electromagnetic fields at a plurality of positions on the sensing surface 108 to provide a plurality of signals; and
detecting, from the plurality of signals, a position relative to the sensing surface 108 for which a combined electromagnetic field is at a maximum.

**FIG. 1**

**FIG. 2**

HEIGHT ABOVE
SURFACE

120

114

$b$

$a$

$h_1$

104

302

118

SURFACE
RIGHT

102

300

100

$h_2$

112

116 SURFACE
UP

306

304

108

$\phi$

$\theta$

*FIG. 3*

HEIGHT ABOVE
SURFACE

114

120

$b$

$a$

112

$h_1$

302

$h_2$

304

$c$ $d$

306

DISTANCE ALONG
SURFACE

$\phi$

*FIG. 4*

SURFACE UP

*FIG. 5*

SURFACE
RIGHT

START

RECEIVE INPUT FROM SENSING SURFACE

DETERMINE FIRST SURFACE POSITION

DETERMINE SECOND SURFACE POSITION

DETERMINE STYLUS ORIENTATION

DETERMINE STYLUS POSITION

OUTPUT STYLUS POSITION AND
ORIENTATION

*FIG. 6*

702 — START

704 — RECEIVE INPUT FROM SENSING SURFACE

706 — DETERMINE STRENGTH OF FIELD DUE TO DISTAL TRANSMITTER

708 — DETERMINE STYLUS ORIENTATION FROM FIELD STRENGTH

710 — DETERMINE STYLUS POSITION DEPENDENT UPON FIELD OF PROXIMAL STYLUS TRANSMITTER

712 — OUTPUT STYLUS POSITION AND ORIENTATION

700

*FIG. 7*

Europäisches
Patentamt

European
Patent Office

Office européen
des brevets

# EUROPEAN SEARCH REPORT

Application Number

EP 12 16 7463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/154950 A1 (N TRIG LTD [IL]; GELLER ILAN [IL]; STERN YUVAL [IL]; KALMANOVICH ALEX) 15 December 2011 (2011-12-15)<br>* page 8, line 16 - page 14, line 6; figures 1, 2A *<br>* page 17 - page 18 * | 1-15 | INV.<br>G06F3/0354<br>G06F3/0346 |
| X | US 5 717 168 A (DEBUISSER THOMAS [FR] ET AL) 10 February 1998 (1998-02-10)<br>* abstract *<br>* column 9, line 8 - column 10, line 7; figures 9, 10 * | 1-9 | |
| X | US 2005/107979 A1 (BUERMANN DALE H [US] ET AL) 19 May 2005 (2005-05-19)<br>* abstract *<br>* paragraph [0074] * | 10-15 | |
| X | US 6 727 891 B2 (MORIYA NETZER [IL] ET AL) 27 April 2004 (2004-04-27)<br>* column 6, line 19 - column 8, line 36; figures 1-3 * | 1,5 | |
| X | WO 99/36883 A1 (ELECTRONICS FOR IMAGING INC [US]) 22 July 1999 (1999-07-22)<br>* page 3, line 14 - page 6, line 4 * | 1,5 | TECHNICAL FIELDS SEARCHED (IPC)<br><br>G06F |
| A | EP 2 219 104 A2 (WACOM CO LTD [JP]) 18 August 2010 (2010-08-18)<br>* paragraph [0113] - paragraph [0131] * | 10-15 | |

The present search report has been drawn up for all claims

| Place of search | Date of completion of the search | Examiner |
|---|---|---|
| The Hague | 17 September 2012 | Cohen, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 12 16 7463

The Search Division considers that the present European patent application does not comply with the requirements of unity of invention and relates to several inventions or groups of inventions, namely:

1. claims: 1-9

   Claims 1-4: stylus with a first transmitter, the orientation (tilt and location) of the stylus being derivable from sensing the position of signals from the first transmitter and a second transmitter, solving a problem of detecting orientation.
   Claims 5-9: corresponding sensing device.

1.1. claims: 10-15

   Stylus with a first transmitter, the tilt of the stylus being derivable from sensing the strength of the signal from the first transmitter, solving a problem of detecting tilt.
   ---

Please note that all inventions mentioned under item 1, although not necessarily linked by a common inventive concept, could be searched without effort justifying an additional fee.

# EP 2 662 755 A1

## ANNEX TO THE EUROPEAN SEARCH REPORT
## ON EUROPEAN PATENT APPLICATION NO.

EP 12 16 7463

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2012

| Patent document cited in search report | | Publication date | Patent family member(s) | | Publication date |
|---|---|---|---|---|---|
| WO 2011154950 | A1 | 15-12-2011 | NONE | | |
| US 5717168 | A | 10-02-1998 | AT | 147874 T | 15-02-1997 |
| | | | CA | 2149213 A1 | 26-05-1994 |
| | | | DE | 69307544 D1 | 27-02-1997 |
| | | | DE | 69307544 T2 | 07-08-1997 |
| | | | EP | 0670070 A1 | 06-09-1995 |
| | | | ES | 2097630 T3 | 01-04-1997 |
| | | | JP | H09501247 A | 04-02-1997 |
| | | | US | 5717168 A | 10-02-1998 |
| | | | WO | 9411844 A1 | 26-05-1994 |
| US 2005107979 | A1 | 19-05-2005 | US | 2005107979 A1 | 19-05-2005 |
| | | | WO | 2005045660 A2 | 19-05-2005 |
| US 6727891 | B2 | 27-04-2004 | NONE | | |
| WO 9936883 | A1 | 22-07-1999 | AU | 743912 B2 | 07-02-2002 |
| | | | AU | 1624799 A | 02-08-1999 |
| | | | BR | 9814763 A | 17-10-2000 |
| | | | CA | 2316208 A1 | 22-07-1999 |
| | | | EP | 1048005 A1 | 02-11-2000 |
| | | | IL | 137060 A | 08-03-2007 |
| | | | JP | 2002509317 A | 26-03-2002 |
| | | | US | 6184873 B1 | 06-02-2001 |
| | | | WO | 9936883 A1 | 22-07-1999 |
| EP 2219104 | A2 | 18-08-2010 | CN | 101807136 A | 18-08-2010 |
| | | | CN | 201590054 U | 22-09-2010 |
| | | | EP | 2219104 A2 | 18-08-2010 |
| | | | JP | 2010191588 A | 02-09-2010 |
| | | | US | 2010207607 A1 | 19-08-2010 |

EPO FORM P0459

For more details about this annex : see Official Journal of the European Patent Office, No. 12/82

17